# EUROPEAN PATENT SPECIFICATION

(11) **EP 0 675 858 B1**
(45) Date of publication and mention of the grant of the patent: **09.10.1996**
(21) Application number: 94904142.0
(22) Date of filing: 21.12.1993
(51) Int. Cl.: C03C 13/06, C03C 3/087, A01G 31/00

(54) **THERMOSTABLE AND BIOLOGICALLY SOLUBLE MINERAL FIBRE COMPOSITIONS**
THERMOSTABILE UND BIOLÖSLICHE MINERALFASERZUSAMMENSETZUNGEN
COMPOSITIONS DE FIBRES MINERALES THERMOSTABLES ET SOLUBLES DANS LES LIQUIDES BIOLOGIQUES

(30) Priority: 29.12.1992 DK 1568/92
(43) Date of publication of application: 11.10.1995
(73) Proprietor: Rockwool International A/S, DK-2640 Hedehusene (DK)
(72) Inventor: CHRISTENSEN, Vermund, Rust, DK-4000 Roskilde (DK)
(74) Representative: Kyed, Iver
(86) International application number: DK9300437
(87) International publication number: WO9414718

(56) References cited:
- AU-B- 255 803
- GB-A- 520 247
- SU-A- 607 807
- US-A- 2 576 312

## Description

The present invention relates to thermostable mineral compositions and more specifically relates to thermostable mineral compositions being soluble in biological fluids. Even more specifically the present invention relates to mineral fibres formed from the mineral compositions and relates to mineral fibre insulation and a mineral fibre plant growing medium made from these compositions.

Mineral fibre insulation is widely used and has been a commercial product for a long period of time. The insulation products are made from mineral raw materials such as rock or slag which are melted and spun into fibres which a binder holds together. The binder is usually a phenol-formaldehyde resin or a urea-modified phenol-formaldehyde resin.

It is well known that mineral fibre insulation products are advantageous as compared to glass fibre insulations products in their higher fire resistance, i.e. an excellent thermostability. Typically, glass wool withstands temperatures up to around 650°C whereas mineral wool is capable of withstanding temperatures up to 1000°C. It is highly desirable to maintain or even increase this excellent property in any modification of the hitherto known mineral fibre products.

Recently, more attention has been put to health issues in connection with various fibrous materials, including insulation wool fibres. It is well known that inhalation of certain types of fibres such as asbestos fibres may lead to respiratory diseases, including lung cancer. It is believed that an important factor is the ability of the asbestos fibres to remain in the lung for extended periods of time. Although there has not yet been provided any evidence of man-made fibre being the cause of respiratory or other diseases in man, it is desirable to provide mineral fibres with an increased dissolution rate in biological fluids, since it is expected that such fibres will have a considerably shorter half-time in the lung upon inhalation.

WO 89/12032 discloses inorganic mineral fibre compositions among which some have passed the ASTM E-119 two hour fire test as well as exhibit low durabilities in physiological saline solutions, i.e. have high dissolutions rates therein. The components of the disclosed compositions may vary considerably. However, all the disclosed compositions are made from pure metal oxides or from less pure raw materials with addition of pure oxides which make the disclosed compositions very costly.

The object of the present invention is to provide a fiberisable mineral composition made from naturally occurring and inexpensive raw materials which has a high dissolution rate in biological fluids and exhibits an excellent thermostability.

The present invention provides a fiberisable mineral composition which is thermostable and has a high dissolution rate in biological fluids and which consists essentially of
- SiO₂: 56 - 65 W/W%
- Al₂O₃: ≤ 5 W/W%
- CaO: ≤ 10 W/W%
- MgO: 23 - 36 W/W%
- FeO + Fe₂O₃: ≤ 8 w/w%,
the total amount of FeO and Fe₂O₃ calculated as FeO.

Surprisingly it has been found that mineral fibres having both a high dissolution rate in biological fluids and an excellent thermostability can be formed from mineral compositions of naturally occurring raw materials such as olivine, quartz, dolomite and iron ore.

The compositions of the invention may e.g. be prepared from the following naturally occurring raw materials:
- Olivine sand: about 66 %
- Quartz sand: about 34 %.

According to the present invention, a preferred range for the total amount of CaO, MgO, FeO and Fe₂O₃ in the mineral composition of the invention is:

35 w/w% ≤ CaO + MgO + FeO + Fe₂O₃ ≤ 40 w/w%.

A preferred range for the total amount of CaO, FeO and Fe₂O₃ in the mineral composition of the invention is:

CaO + FeO + Fe₂O₃ ≤ 15 w/w%.

The mineral composition of the present invention is particularly suitable for the manufacture of mineral fibres by the method disclosed e.g. in WO 92/06047.

For the manufacturing of fine fibres e.g. by this method a composition having a viscosity, of approximately 15 poise at the working temperature is necessary. On the other hand it is also desirable that the melt composition has a viscosity not lower than approximately 4 poise at the working temperature.

It is not obvious that the rate of dissolution of the mineral fibre composition can be increased while maintaining other necessary properties. As mentioned above, the melt viscosity must be maintained within a narrow range in order to allow fiberisation by the manufacturing methods currently in use. The resulting mineral wool must be sufficiently durable to maintain its physical integrity throughout the life-time of the building, ship or other location of final use. Furthermore, the resulting mineral wool must be sufficiently thermostable to provide excellent fire resistance to the final insulation product.

The viscosity of a mineral melt composition is dependent on the total content of silica and alumina: high total silica and alumina results in a high viscosity and vice versa. Accordingly, the viscosity provides certain restrictions on how the composition can be modified.

It is believed that the amount of magnesia and ferrous/ferric oxide components in a mineral composition has a significant influence on the thermostability of the mineral fibre. The ferrous/ferric oxide plays the important role of a crystal nucleating agent in the conversion of the mineral fibre material from an amorphous condition to a crystalline or pseudo crystalline state during external influence of heat, i.e. during heat-up or fire. Accordingly, this provides certain restrictions on the minimum amount of ferrous/ferric oxide component present in the composition. It should be noted that mineral fibre material without ferrous or ferric oxide may be capable of withstanding high temperatures which are reached by slow heat-up in contrast to the fast heat-up resulting e.g. from external fire. As mentioned above, when mineral fibre material is subjected to fire (sudden and/or fast heat-up), the structure of the material, i.e. the mineral wool, is converted from an amorphous condition to a crystalline state and, accordingly, the thermostability of the mineral fibre material requires the presence of a crystal nucleating agent in the fibre material. On the other hand it is expected, e.g. from WO 89/12032, that the presence of alumina and ferrous/ferric oxide components in the mineral composition has a significant negative influence on the rate of dissolution, cf. below.

The rate of dissolution or durability, however, provides the most complicated restriction. The mineral wool must be relatively inert to moisture attack at the installation site, but it must dissolve quickly in the lung. Since both these situations involve water attack on the fibres under nearneutral acid-base conditions, it is also surprising that this requirement can be met by compositional modifications.

In the present specification and claims, the term "biological fluid" denotes physiological salt or saline solutions as well as any fluid present in vivo in mammals.

Another advantageous fiberisable mineral composition of the invention consists essentially of:
- SiO₂: 60 - 65 w/w%
- Al₂O₃: ≤ 4 w/w%
- CaO: ≤ 10 w/w%
- MgO: 23 - 36 w/w%
- FeO + Fe₂O₃: 2 - 8 w/w%,
the total amount of FeO and Fe₂O₃ calculated as FeO.

The present invention also relates to mineral fibre material made from a mineral composition according to the invention.

In a preferred embodiment of the invention, mineral fibre material according to the invention preferably has a sintering temperature of at least 1000°C, more preferably at least 1100°C, especially at least 1200°C.

The invention further relates to a method of increasing the rate of dissolution in a biological fluid of a thermostable mineral fibre material, in which method a composition according to the invention is used for preparing the mineral fibre material.

The mineral fibre material according to the invention which is thermostable and has a high dissolution rate in biological fluids is useful for thermal and/or acoustic insulation purposes or as a plant growing medium or substrate.

Another advantageous fiberisable mineral composition of the invention consists essentially of:
- SiO₂: 60 - 65 w/w%
- Al₂O₃: 0.5 - 3 w/w%
- CaO: ≤ 8 w/w%
- MgO: 23 - 36 w/w%
- FeO + Fe₂O₃: 2 - 8 w/w%,
the total amount of FeO and Fe₂O₃ calculated as FeO.

Yet another advantageous fiberisable mineral composition of the invention consists essentially of:
- SiO₂: 59 - 65 w/w%
- Al₂O₃: ≤ 2 w/w%
- CaO: ≤ 8 w/w%
- NgO: 23 - 36 w/w%
- FeO + Fe₂O₃: 1 - 8 w/w%,
the total amount of FeO and Fe₂O₃ calculated as FeO.

### EXAMPLE

The dissolution rate and the thermostability of mineral fibres made from known compositions or comparison compositions and a composition of the invention, respectively, was determined as described below. The fibres were made by melting the mineral composition to be tested in a conventional furnace, followed by spinning the fibre material into mineral wool. Binder was not applied.

The following mineral fibre compositions were tested:
- Composition A:: Commercial mineral fibre composition manufactured by Rockwool Lapinus B.V., Roermond, Netherlands.
- Composition B, C, D:: Comparison mineral fibre compositions.
- Composition E, F:: Mineral fibre compositions according to the invention.

The constituents of each test composition is shown in Table 1. It is to be understood that in addition to the constituents mentioned in Table 1 each of the tested fibre compositions contained up to a total of 2 w/w% of other constituents (traces) forming part of the raw materials used. Such other constituents may include, for example, manganous oxide, chromium oxide and various sulfur compounds. However, the percentages in Table 1 are standardised to a total of 100 w/w% of the listed constituents.

### TEST METHODS

### Dimensions of the Fibre Samples

The samples were sieved, and the fraction below 63 µm was used for the tests.

For each sample, the fibre diameter distribution was determined, measuring the diameter and length of 200 individual fibres by means of an optical microscope (1000 X magnification). The readings were used for calculating the specific surface of the fibre samples, taking into account the density of the fibres.

### Measurements of Rate of Dissolution (Stationary Set-Up)

300 mg of fibres were placed in polyethylene bottles containing 500 ml of a modified Gamble's solution (i.e. with complexing agents) at pH 7.5. Once a day the pH was checked and if necessary adjusted by means of HCl.

The tests were carried out during a one week period. The bottles were kept in water bath at 37 °C and shaken vigorously twice a day. Aliquots of the solution were taken out after one and four days and analysed for Si on an Perkin-Elmer Atomic Absorption Spectrophotometer.

The modified Gamble's solution, adjusted to pH 7.5 ± 0.2, had the following composition:

| | g/l |
|---|---|
| MgCl₂•6H₂O | 0.212 |
| NaCl | 7.120 |
| CaCl₂•2H₂O | 0.029 |
| Na₂SO₄ | 0.079 |
| Na₂HPO₄ | 0.148 |
| NaHCO₃ | 1.950 |
| (Na2-tartrate)•2H₂O | 0.180 |
| (Na3-citrate)•2H₂O | 0.152 |
| 90% Lactic acid | 0.156 |
| Glycine | 0.118 |
| Na-pyruvate | 0.172 |
| Formalin | 1 ml |

### Calculations

Based on the dissolution of SiO₂ (network dissolution), the specific thickness dissolved was calculated and the rate of dissolution established (nm/day). The calculations are based on the SiO₂ content in the fibres, the specific surface and the dissolved amount of Si.

### Thermostability

The thermostability expressed as the sintering temperature of the fibre compositions A-F was established by the following method:

A sample (5 x 5 x 7.5 cm) of mineral wool made of the fibre composition to be tested was placed in a furnace pre-heated to 700°C. After 0.5 hours exposure the shrinkage and the sintering of the sample were evaluated. The method was repeated each time with a fresh sample and a furnace temperature 50°C above the previous furnace temperature until the maximum furnace temperature, at which no sintering or no excessive shrinkage of the sample was observed, was determined.

The test results are shown in Table 2 below.

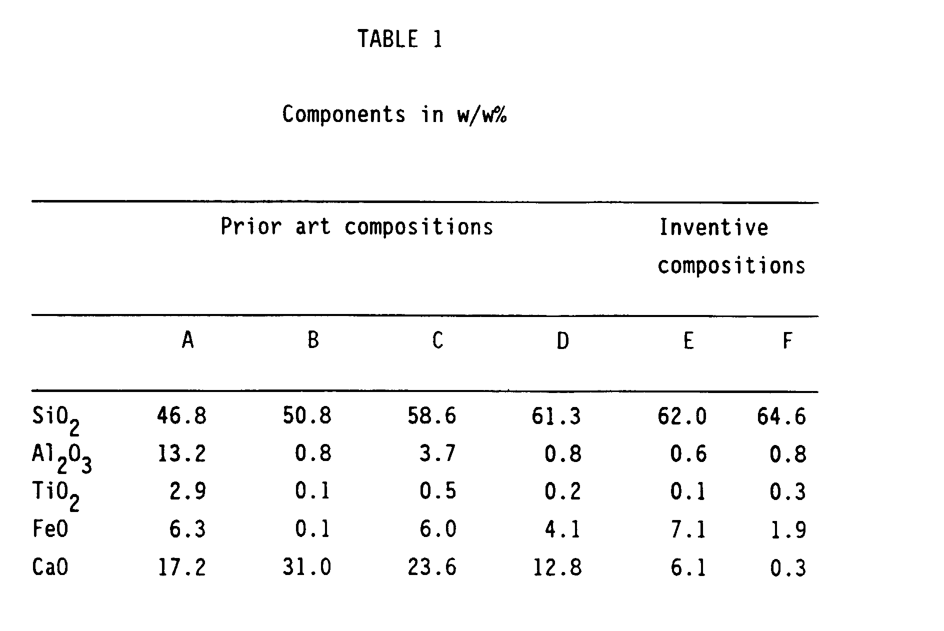

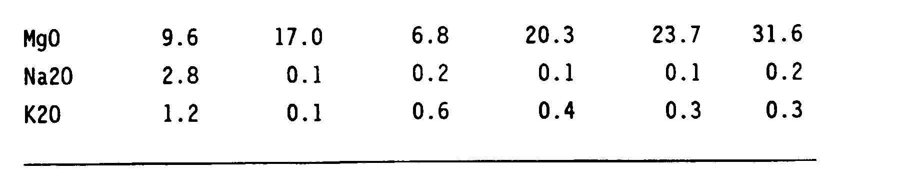

**TABLE 2**

| Composition | A | B | C | D | E | F |
|---|---|---|---|---|---|---|
| Sintering temp. (°C) | 1050 | 750 | 750 | 800 | 1200 | 1150 |
| Dissolution* pH = 7.5 | 3 | 45 | 6 | 32 | 32 | 45 |

| | | | | | | |
|---|---|---|---|---|---|---|
| *: Dissolution rate of Si (nm/day), 1st-4th day. | | | | | | |

The test results clearly demonstrate that the fibres formed from the composition of the invention have an excellent thermostability - expressed as a sintering temperature of 1150°C and 1200°C, respectively - in comparison with the prior art fibres. The commercial product (composition A) exhibits also a high thermostability whereas the comparison compositions B, C and D exhibit relatively poor thermostabilities.

The comparative composition B has a higher dissolution rate than the comparative compositions A and C. These results are not surprising, since the total amount of alumina and ferrous/ferric oxide in composition B is less than 1 w/w%. The sintering temperature, however, is unacceptably low.

By comparing the comparative compositions B, C and the comparative composition D it is seen that it is possible to obtain an increased sintering temperature by decreasing the content of CaO even with a relative low content of FeO.

For the inventive compositions E and F an excellent thermostability is obtained as compared to e.g. the comparative compositions C and D by decreasing the content of CaO and increasing the content of MgO.

From the results it is concluded that the mineral fibres made from the compositions of the invention have excellent thermostabilities as well as high dissolution rates in biological fluids.

## Claims

1. A fiberisable mineral composition which is thermostable and has a high dissolution rate in biological fluids and which consists essentially of
SiO₂ 56 - 65 w/w%
Al₂O₃ ≤ 5 w/w%
CaO ≤ 10 w/w%
MgO 23 - 36 w/w%
FeO + Fe₂O₃ ≤ 8 w/w%,
the total amount of FeO and Fe₂O₃ calculated as FeO.

2. A mineral composition according to claim 1 which consists essentially of
SiO₂ 59 - 65 w/w%
Al₂O₃ ≤ 2 w/w%
CaO ≤ 8 w/w%
MgO 23 - 36 w/w%
FeO + Fe₂O₃ 1 - 8 w/w%,
the total amount of FeO and Fe₂O₃ calculated as FeO.

3. A mineral composition according to claim 1 or 2, wherein the total amount of CaO, MgO and FeO + Fe₂O₃ is:
35 w/w% ≤ CaO + MgO + FeO + Fe₂O₃ ≤ 40 w/w%.

4. A mineral composition according to any of the claims 1-3, wherein the total amount of CaO and FeO + Fe₂O₃ is:
CaO + FeO + Fe₂O₃ ≤ 15 w/w%.

5. A mineral fibre material which is thermostable, and has a high dissolution rate in biological fluids, and is made from a mineral composition according to any of the claims 1-4.

6. A mineral fibre material according to claim 5 which preferably has a sintering temperature of at least 1000°C, more preferably at least 1100°C, especially at least 1200°C.

7. A method of increasing the dissolution rate in a biological fluid of a thermostable mineral fibre material, wherein a composition according to any of the claims 1-4 is used for preparing the mineral fibre material.

8. Use of a mineral fibre material according to claim 5 or 6 for thermal and/or acoustic insulation purposes.

9. Use of a mineral fibre material according to claim 5 or 6 as a plant growing medium or substrate.

## Patentansprüche

1. Zu Fasern umwandelbare mineralische Zusammensetzung, welche thermostabil ist und eine hohe Auflösungsgeschwindigkeit in biologischen Fluiden besitzt und welche im wesentlichen besteht aus:
SiO₂ 56 - 65 Gew./Gew.-%
Al₂O₃ ≤ 5 Gew./Gew.-%
CaO ≤ 10 Gew./Gew.-%
MgO 23 - 36 Gew./Gew.-%
FeO + Fe₂O₃ ≤ 8 Gew./Gew.-%,
wobei die Gesamtmenge von FeO und Fe₂O₃ als FeO berechnet wird.

2. Mineralische Zusammensetzung nach Anspruch 1, welche im wesentlichen besteht aus:
SiO₂ 59 - 65 Gew./Gew.-%
Al₂O₃ ≤ 2 Gew./Gew.-%
CaO ≤ 8 Gew./Gew.-%
MgO 23 - 36 Gew./Gew.-%
FeO + Fe₂O₃ 1 - 8 Gew./Gew.-%,
wobei die Gesamtmenge von FeO und Fe₂O₃ als FeO berechnet wird.

3. Mineralische Zusammensetzung nach Anspruch 1 oder 2, worin die Gesamtmenge von CaO, MgO und FeO + Fe₂O₃ beträgt: 35 Gew./Gew.-% ≤ CaO + MgO + FeO + Fe₂O₃ ≤ 40 Gew./Gew.-%.

4. Mineralische Zusammensetzung nach einem der Ansprüche 1 - 3, worin die Gesamtmenge von CaO und FeO + Fe₂O₃ beträgt: CaO + FeO + Fe₂O₃ ≤ 15 Gew./Gew.-%.

5. Mineralfasermaterial, welches thermostabil ist und eine hohe Auflösungsgeschwindigkeit in biologischen Fluiden besitzt und aus einer mineralischen Zusammensetzung nach einem der Ansprüche 1 - 4 hergestellt ist.

6. Mineralfasermaterial nach Anspruch 5, welches bevorzugt eine Sintertemperatur von wenigstens 1000° C, mehr bevorzugt wenigstens 1100° C, insbesondere wenigstens 1200° C besitzt.

7. Verfahren zur Erhöhung der Auflösungsgeschwindigkeit in einem biologischen Fluid von einem thermostabilen Fasermaterial, bei welchem eine Zusammensetzung nach einem der Ansprüche 1 - 4 zur Herstellung des Mineralfasermaterials verwendet wird.

8. Verwendung eines Mineralfasermaterials nach Anspruch 5 oder 6 für Wärme- und/oder Akustikisolierungszwecke.

9. Verwendung eines Mineralfasermaterials nach Anspruch 5 oder 6 als Pflanzenwachstumsmedium oder -substrat.

## Revendications

1. Une composition minérale pouvant être transformée en fibres, qui est thermostable et présente une vitesse élevée de dissolution dans les liquides biologiques, et qui consiste essentiellement en
SiO₂ 56 - 65 % en poids
Al₂O₃ ≤ 5 % en poids
CaO ≤ 10 % en poids
MgO 23 - 36 % en poids
FeO + Fe₂O₃ ≤ 8 % en poids,
la quantité totale de FeO et Fe₂O₃ étant calculée en FeO.

2. Une composition minérale selon la revendication 1, qui consiste essentiellement en
SiO₂ 59 - 65 % en poids
Al₂O₃ ≤ 2 % en poids
CaO ≤ 8 % en poids
MgO 23 - 36 % en poids
FeO + Fe₂O₃ 1 - 8 % en poids,
la quantité totale de FeO et Fe₂O₃ étant calculée en FeO.

3. Une composition minérale selon la revendication 1 ou 2, dans laquelle la quantité totale de CaO, MgO et FeO + Fe₂O₃ est :
35 % en poids ≤ CaO + MgO + FeO + Fe₂O₃ ≤ 40 % en poids.

4. Une composition minérale selon l'une quelconque des revendications 1-3, dans laquelle la quantité totale de CaO et FeO + Fe₂O₃ est :
CaO + FeO + Fe₂O₃ ≤ 15 % en poids.

5. Une matière de fibres minérales qui est thermostable et présente une vitesse élevée de dissolution dans les liquides biologiques, et qui est réalisée à partir d'une composition minérale selon l'une quelconque des revendications 1-4.

6. Une matière de fibres minérales selon la revendication 5, qui présente de préférence une température de frittage d'au moins 1000° C, plus préférablement d'au moins 1100° C, en particulier d'au moins 1200° C.

7. Un procédé pour augmenter la vitesse de dissolution d'une matière de fibres minérales thermostable dans un liquide biologique, dans lequel une composition selon l'une des revendications 1-4 est utilisée pour préparer la matière de fibres minérales.

8. Utilisation d'une matière de fibres minérales selon la revendication 5 ou 6 dans des buts d'isolation thermique et/ou acoustique.

9. Utilisation d'une matière de fibres minérales selon la revendication 5 ou 6 comme agent ou substrat de croissance des plantes.
